# EUROPEAN PATENT APPLICATION

(11) **EP 4 631 740 A1**
(43) Date of publication of application: **15.10.2025**
(21) Application number: 24169076.7
(22) Date of filing: 08.04.2024
(51) Int. Cl.: B60B 27/00, B60B 27/02, B60B 27/04, F16D 41/24

(54) **HUB ARRANGEMENT**

(71) Applicant: Hirschvogel E-Solutions GmbH, 87600 Kaufbeuren (DE)
(72) Inventor: Meingassner, Martin, 85625 Baiern-Antholing (DE); Hartmann, Jakob, 83098 Brannenburg (DE); Rottmayr, Carlo, 83620 Vagen (DE)

(57) **Abstract**

Hub arrangement (710) comprising a static hollow shaft arrangement (711), a first drive arrangement (713) rotatably arranged on the hollow shaft arrangement, a first bearing arrangement comprising at least one bearing (715), a second drive arrangement (718), wherein the at least one bearing of the first bearing arrangement rotatably supports the second drive arrangement on the first drive arrangement. The hub arrangement further comprises a freewheel arrangement (719), wherein the freewheel arrangement is arranged between the first drive arrangement and the second drive arrangement in a freewheel section of the first drive arrangement, wherein the freewheel arrangement is configured to allow rotation of the second drive arrangement on the first drive arrangement in a first direction of rotation, and to block rotation of the second drive arrangement on the first drive arrangement in a second direction of rotation, wherein the freewheel section is arranged next to the bearing section.

## Description

### TECHNICAL FIELD

The disclosure relates to a hub arrangement, especially a rear hub arrangement for bicycles.

### BACKGROUND

Although applicable to any type of hub, the present disclosure will mainly be described in conjunction with rear hubs for bicycles.

Rear hubs for bicycles usually transfer the force or movement provided by a cyclist's legs to the rear wheel of the bicycle. When the cyclist stops the pedaling action, a freewheel or freewheel device decouples the wheel from the drivetrain, such that the wheel freely rotates, while the cyclist's legs may rest.

Common freewheels are complex mechanical systems that occupy a large installation space.

Accordingly, there is a need for providing an improved freewheel device.

### SUMMARY

The above stated problem is solved by the features of the independent claims. It is understood, that independent claims of a claim category may be formed in analogy to the dependent claims of another claim category.

Accordingly, it is provided:
Hub arrangement comprising a static hollow shaft arrangement, also called spindle or spindle arrangement, a first, especially cylindrical, drive arrangement rotatably arranged on the hollow shaft arrangement, a first bearing arrangement comprising at least one bearing, wherein the first bearing arrangement is arranged on the first drive arrangement, i.e., on the outside of the first drive arrangement, in a bearing section of the first drive, a second, especially cylindrical, drive arrangement arranged at least in part on the first bearing arrangement, wherein the at least one bearing of the first bearing arrangement rotatably supports the second drive arrangement on the first drive arrangement. The hub arrangement further comprises a freewheel arrangement, especially a silent freewheel arrangement, wherein the freewheel arrangement is arranged between the first drive arrangement and the second drive arrangement in a freewheel section of the first drive arrangement, wherein the freewheel arrangement is configured to allow rotation of the second drive arrangement on the first drive arrangement in a first direction of rotation, and to block rotation of the second drive arrangement on the first drive arrangement in a second direction of rotation that is opposite to the first direction of rotation, and wherein on the first drive arrangement the freewheel section is arranged next to the bearing section.

Common rear hubs, like rear hubs for bicycles, usually comprise a freewheel. The present disclosure is based on the finding that in conventional rear hubs the freewheel generates a high amount of noise when freewheeling i.e., when the rider of the bicycle does not actively pedal with his legs. Further common freewheels occupy a large installation space.

The present disclosure, therefore, provides an improved hub arrangement that may e.g., be used with bicycles or other adequate vehicles. The hub arrangement according to the present invention comprises a static hollow shaft arrangement. The hollow shaft arrangement may comprise a single element or any number of elements that form a mechanical carrier or carrier element for the hub arrangement.

A first drive arrangement is rotatably installed on the static hollow shaft arrangement, and a first bearing arrangement is installed on the outside of the first drive arrangement. The first bearing arrangement comprises at least one bearing. The term "outside" here refers to the outside of the first drive arrangement in radial direction. A second drive arrangement is rotatably installed or arranged at least in part over the first drive arrangement via the first bearing arrangement. The first bearing arrangement is installed in a bearing section of the first drive arrangement.

The hub arrangement further comprises a freewheel arrangement that is in radial direction installed between the first drive arrangement, and the second drive arrangement. In axial direction the freewheel arrangement is installed next to the first bearing arrangement, especially next to the at least one bearing of the first bearing arrangement, and in a freewheel section of the first drive arrangement.

The bearing section, and the freewheel section refer to longitudinal sections of the first drive arrangement, also called sections of the first drive arrangement in axial direction. In the context of the present disclosure, an element explained as being installed or arranged in a section of the first drive arrangement is to be understood as being installed in axial direction such that it axially overlaps the respective section of the first drive arrangement. Such elements may, but are not required, to be mounted directly on the first drive arrangement, and further elements may be provided, at least in radial direction, between the first drive arrangement and the respective other element.

The static hollow shaft arrangement serves for fixing the hub arrangement to an external element, like the frame of a bicycle or any other type of vehicle, especially the rearward-facing fork end of such a frame. The static hollow shaft arrangement may comprise e.g., an accommodation space for an axle, especially a quick-release axle that may fix the hub arrangement to a frame. To this end, the static hollow shaft arrangement may comprise a single tube-like element, or any combination of elements, that may form the static hollow shaft arrangement. The static hollow shaft arrangement, as well as the first drive arrangement, the first bearing arrangement, the second drive arrangement, and the freewheel arrangement, may, but not necessarily need to, comprise at least in part a cylindrical or a rotationally symmetric body. This does not exclude that single features of the respective arrangement may comprise non-cylindrical or non-rotationally symmetric elements.

With the static hollow shaft arrangement as carrier, the further elements of the hub arrangement may rotationally movably be provided in the static hollow shaft arrangement.

The first drive arrangement is rotatably provided on the hollow shaft in order to provide a rotating movement from a drive train of the bicycle to the wheel that uses or carries the hub arrangement. The first drive arrangement may comprise a single element or multiple elements that together may form a kind of sleeve or covering element that may slide onto the static hollow shaft arrangement. The first drive arrangement, when provided as cylindrical element or arrangement, may comprise a plurality of sections in axial direction, each with a different inner and/or outer diameter.

The first bearing arrangement is provided on the outside of the first drive arrangement and comprises at least one bearing. It is understood, that any kind of adequate bearing, like a ball bearing, a roller bearing or a needle bearing may be used as bearing in the first bearing arrangement. Further, it is understood, that the first bearing arrangement may comprise exactly one bearing, or more than one bearing if adequate, to support the second drive arrangement.

The second drive arrangement is arranged at least in part on the first bearing arrangement and is rotatably supported on the first drive arrangement by the first bearing arrangement. As will be explained in more detail below, the combination of the first drive arrangement, and the second drive arrangement serves to allow freewheeling of the wheel that carries or uses the hub arrangement. The second drive arrangement may be the element of the hub arrangement that forwards the rotational movement or force to the outer elements of the wheel, like the spokes, the rim, and the tire. The second drive arrangement may also be the element of the hub arrangement that may be driven by an electric motor, in case that the hub arrangement is used in a hub with an integrated electric motor.

The freewheel arrangement is provided between the first drive arrangement, and the second drive arrangement, and allows the second drive arrangement to rotate in a first direction of rotation with respect to or relative to the first drive arrangement, and prevents rotation of the second drive arrangement in the opposite, second direction of rotation. The first direction of rotation is the direction of rotation in that the second drive arrangement rotates around the first drive arrangement, when the bicycle or other vehicle is moving forward, while the first drive arrangement is not actively driven to rotate by an external source i.e., when the first drive arrangement is not rotating, or while the first drive arrangement is driven to rotate by an external source slower than the second drive arrangement is rotating due to the speed of the bicycle.

In embodiments, the freewheel arrangement is provided as silent freewheel arrangement. A silent freewheel arrangement is defined by the fact that in the freewheeling mode of operation, the silent freewheel arrangement does not emit more sound than in the blocking mode of operation.

In the hub arrangement the bearing section and the freewheel section are arranged next to each other. In an embodiment, the bearing section is arranged on the outside of the hub arrangement with regard to the freewheel section. The expression "on the outside" in this regard refers to the bearing section being the first section, and the freewheel section being the second section, when following the hub arrangement in axial direction from an outer end. In the installed position of the hub arrangement when viewing the hub arrangement or the vehicle from the back, usually the bearing section will be positioned right of the freewheel section. The bearing section, and in embodiments also the freewheel section, may be positioned left of the axial center of the hub arrangement. The freewheel section may be said to be on the inside of the hub arrangement, while the bearing section may be on the outside of the hub arrangement with regard to the freewheel section.

The hub arrangement according to the present disclosure provides for a very compact arrangement of the elements that are required to allow the second drive arrangement to freewheel against the first drive arrangement.

Especially, in combination with an electric motor in the hub arrangement, the resulting increased mounting space may be advantageously used to accommodate the elements of the electric motor system, like sensors, as will be explained in more detail below.

Further embodiments of the present disclosure are subject of the further dependent claims and of the following description, referring to the drawings.

In the following, the dependent claims referring directly or indirectly to claim 1 are described in more detail. For the avoidance of doubt, the features of the dependent claims relating to independent claim 1 can be combined in all variations with each other and the disclosure of the description is not limited to the claim dependencies as specified in the claim set.

In an embodiment, which can be combined with all other embodiments mentioned above or below, the freewheel section may be arranged directly adjacent to the bearing section.

The full freewheeling system may comprise the first drive arrangement, the second drive arrangement, the first bearing arrangement, and the freewheel arrangement. By providing the freewheel section directly adjacent to the bearing section, the mounting space that the full freewheeling system requires may be reduced.

Directly adjacent in this context refers to no further elements being provided between the first bearing arrangement, especially the bearing, and the freewheel arrangement. The expression "no further elements" in this regard may especially refer to functional elements that serve any other purpose than the freewheeling. Such elements may e.g. be sealing elements or bearings.

In another embodiment, which can be combined with all other embodiments mentioned above or below, the hub arrangement may further comprise a second bearing arrangement arranged between the static hollow shaft arrangement and the first drive arrangement, wherein the second bearing arrangement may comprise at least one bearing, and wherein at least one bearing of the first bearing arrangement may be arranged at least in part over at least one bearing of the second bearing arrangement in axial direction.

The second bearing arrangement serves to allow rotation of the first drive arrangement on the static hollow shaft arrangement in any direction. Consequently, no directional lock, like a freewheel, is provided between the first drive arrangement, and the static hollow shaft arrangement.

The second bearing arrangement comprises at least one bearing. It is understood, that more than one bearing may be provided axially distributed along the body of the first drive arrangement.

The bearings of the first bearing arrangement, and the second bearing arrangement are provided such that at least one bearing of the second bearing arrangement, and one bearing of the first bearing arrangement are in radial direction arranged overlapping at least in part. Such an arrangement provides for a direct transmission of radial forces from the outer circumference of a wheel that carries the hub arrangement to the static hollow shaft arrangement.

In an embodiment, the first bearing arrangement may comprise a single bearing, and one bearing of the second bearing arrangement may in axial direction be arranged symmetrically under the single bearing of the first bearing arrangement. In another embodiment, with differently sized bearings, the bearing of the second bearing arrangement may in axial direction be arranged under the single bearing of the first bearing arrangement such that one of the bearings fully overlaps the other bearing in axial direction.

In an embodiment, the respective bearing of the second bearing arrangement may be larger than, especially wider in axial direction, or of the same size as the bearing of the first bearing arrangement. In other embodiments, the respective bearing of the second bearing arrangement may be smaller, especially smaller in axial direction, than the bearing of the first bearing arrangement.

In a further embodiment, which can be combined with all other embodiments mentioned above or below, the first drive arrangement further may comprise a coupling section arranged next to the bearing section on a side of the bearing section that may be opposite to the freewheel section, wherein the coupling section may be configured to couple the first drive arrangement to an external drive train.

The coupling section may comprise mechanical accommodation elements to accommodate a belt pulley or a sprocket or a cassette that may transfer force or rotational movement from a drive train to the first drive arrangement.

As explained above, the bearing section may be identified to be on the outside with respect to the freewheel section. The coupling section may be identified to be on the outside of the bearing section. Seen from the respective end of the hub arrangement, the coupling section will be the first section, the bearing section will be the second section, and the freewheel section will be the third section.

In another embodiment, which can be combined with all other embodiments mentioned above or below, the coupling section may be arranged directly adjacent to the bearing section.

By providing the freewheel section directly adjacent to the bearing section, and the coupling section directly adjacent to the bearing section, the mounting space that the full freewheeling system requires may be reduced.

In another embodiment, which can be combined with all other embodiments mentioned above or below, the hub arrangement may further comprise a seal arranged on the first drive arrangement next to the at least one bearing of the first bearing arrangement, wherein the seal may be axially arranged on a side of the at least one bearing that may be opposite to the freewheel arrangement.

As explained above, the installation space required to provide a freewheeling hub is reduced, especially in axial direction, by the first bearing arrangement, and the freewheel arrangement.

It is, consequently, possible to install a full sealing arrangement in the available axial space that seals the outer gap between the first drive arrangement, and the second drive arrangement that is present on the outside face of the hub arrangement.

In a further embodiment, which can be combined with all other embodiments mentioned above or below, the seal may be arranged directly adjacent to the at least one bearing of the first bearing arrangement.

Common hubs do not allow to provide a seal, because of the little installation room that is available. In contrast, with the compact freewheel arrangement according to the present disclosure, the installation space, especially in axial direction, is large enough to provide a seal directly adjacent to the bearing of the first bearing arrangement.

In an embodiment, which can be combined with all other embodiments mentioned above or below, the freewheel arrangement may comprise a cylindrical roller cage arranged between the first drive arrangement and the second drive arrangement. The cylindrical roller cage may comprise a hollow cylindrical body with a plurality of recesses, especially axial recesses, in the cylindrical body, a first number of sprags, wherein each sprag may be arranged in one of the recesses of the cylindrical body, and a second number of rollers, wherein each roller may be arranged in one of the recesses of the cylindrical body, wherein the sprags are configured to allow rotation of the second drive arrangement with regard to the first drive arrangement in the first direction of rotation, and to block rotation of the second drive arrangement with regard to the first drive arrangement in the second direction of rotation.

Common freewheeling systems usually comprise spring-loaded retainer elements that cause unwanted noise. Silent freewheeling systems may comprise sprags that are cylindrically arranged between the two elements that are to freewheel against each other. However, such freewheeling systems require bearings arranged on both sides of the cylindrically arranged sprags. Such bearings increase the installation space required for such freewheeling systems.

The freewheel arrangement, in contrast, comprises a roller cage that may accommodate both, the sprags and respective rollers that take over the function of external bearings.

To this end, the roller cage comprises recesses, especially axial recesses, also called longitudinal in axial direction. Such recesses in the roller cage may all be of the same dimension, if the sprags and the rollers are dimensioned such that they may be mounted in the same recesses. In other embodiments, the recesses for the sprags may be of different sizes than the recesses for the rollers.

In another embodiment, which can be combined with all other embodiments mentioned above or below, in the freewheel arrangement the number of sprags may be larger than the number of rollers, and in the cylindrical roller cage the sprags and rollers may be evenly distributed in the recesses.

The number of rollers and the number of sprags may be chosen such that the retaining force caused by the sprags is as large as required in the respective application, and such that the loading capacity of the rollers is as required. Usually, the sprags and the rollers will be evenly, or symmetrically distributed in the recesses of the roller cage. In embodiments, an uneven distribution is possible.

In a further embodiment, which can be combined with all other embodiments mentioned above or below, in the freewheel arrangement the number of sprags may be three times the number of rollers, and a sequence of three sprags followed by a roller may be repeatedly provided in the cylindrical roller cage.

In an embodiment, which can be combined with all other embodiments mentioned above or below, the sum of the first number and the second number may be equal to the number of recesses.

In embodiments, the sum of the first number and the second number may be lower than the number of recesses. In such embodiments, the weight of the freewheel arrangement may be reduced by leaving recesses in the roller cage empty.

In another embodiment, which can be combined with all other embodiments mentioned above or below, the first drive arrangement may comprise an end face on an end of the freewheel section. In embodiments, the end face may be configured to accommodate a signaling element for a rotary sensor or encoder. In further embodiments, the first drive arrangement may comprise the signaling element arranged on the end face.

The end face may be provided on the inside of the first drive arrangement with respect to the hub arrangement, i.e. on that end of the first drive arrangement that is opposite to the end that carries the coupling section.

The very compact freewheel arrangement allows to provide a first drive arrangement that is "visible" for a sensor that may be provided within the hub arrangement. "Visible" in this regard refers to the fact that the rotation of the first drive arrangement may be directly measured by a sensor that may be provided as fixed, non-rotating element on the static hollow shaft arrangement or a carrier coupled to the static hollow shaft arrangement.

In common hubs it is not possible to provide an end face on the first drive arrangement that may accommodate such a signaling element. Therefore, complex measurement arrangements, like wireless sensing and transmission systems, are installed in such common hubs.

In contrast, with the hub arrangement according to the present disclosure, the end face may be equipped with a respective signaling element. Such a signaling element may e.g., comprise, but is not limited to, a magnetic element, like a ring with multiple magnetic poles, also called axial magnetic rings, or magnetic ring encoders.

Such signaling elements may easily be evaluated with respective sensors, like hall sensors, because the required installation space and access is provided in the hub arrangement.

In another embodiment, which can be combined with all other embodiments mentioned above or below, the first drive arrangement may comprise the signaling element arranged on the end face.

In a further embodiment, which can be combined with all other embodiments mentioned above or below, the hub arrangement may further comprise a sensor element arranged on the static hollow shaft arrangement. The sensor element may be configured to measure a physical parameter from the signaling element and output a respective measurement signal.

The sensor element by being arranged on the static hollow shaft arrangement does not rotate with the first drive arrangement. With the sensor element e.g., a hall sensor, and the signaling element e.g., the rotational speed of the first drive arrangement may easily be measured.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a schematic diagram of an embodiment of a freewheel arrangement according to the present disclosure;
Figure 2 shows a schematic diagram of another embodiment of a freewheel arrangement according to the present disclosure;
Figure 3 shows a schematic diagram of an embodiment of a hub arrangement according to the present disclosure;
Figure 4 shows a schematic diagram of another embodiment of a hub arrangement according to the present disclosure;
Figure 5 shows a schematic diagram of a further embodiment of a hub arrangement according to the present disclosure;
Figure 6 shows a schematic diagram of another embodiment of a hub arrangement according to the present disclosure; and
Figure 7 shows a schematic diagram of a further embodiment of a hub arrangement according to the present disclosure.

In the figures like reference signs denote like elements unless stated otherwise.

### DETAILED DESCRIPTION OF THE DRAWINGS

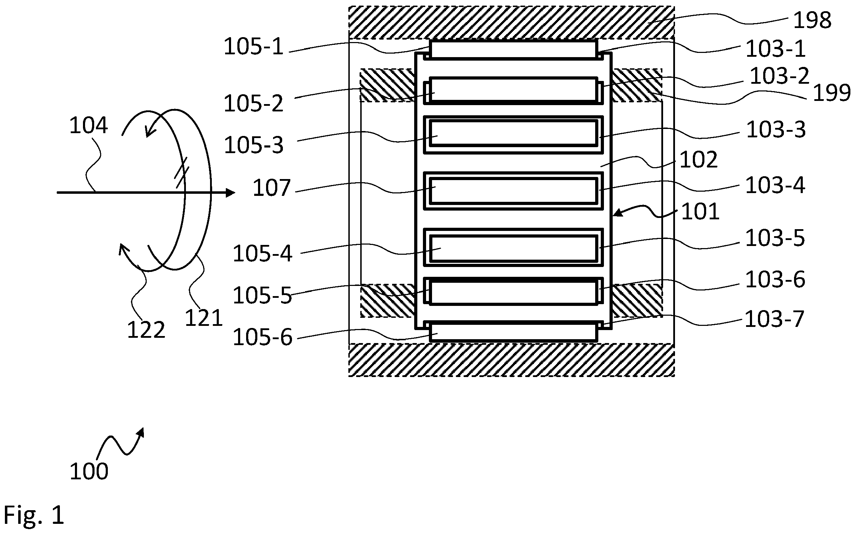

Figure 1 shows a schematic diagram of a freewheel arrangement 100. The freewheel arrangement 100 comprises a cylindrical roller cage 101 arranged between an inner cylindrical body 199, and an outer cylindrical body 198. The cylindrical roller cage 101 comprises a hollow cylindrical body 102 with a plurality of recesses 103-1 - 103-7 in the hollow cylindrical body 102. A first number of sprags 105-1 - 105-6, and a second number of rollers 107 is arranged in the recesses 103-1 - 103-7 of the hollow cylindrical body 102. The explanations provided herein for any one of the embodiments of the freewheel arrangement apply to the freewheel arrangement 100 mutatis mutandis.

The rollers 107 serve for rotatably supporting the inner cylindrical body 199, and the outer cylindrical body 198 with respect to each other. To this end, the rollers 107 are dimensioned such that they roll on the outside of the inner cylindrical body 199, and on the inside of the outer cylindrical body 198.

The sprags 105-1 - 105-6 serve to allow rotation of the outer cylindrical body 198 with regard to the inner cylindrical body 199 in a first direction of rotation 121, and to block rotation of the outer cylindrical body 198 with regard to the inner cylindrical body 199 in a second direction of rotation 122. To this end, the sprags may be formed respectively. The sprags 105-1 - 105-6 may e.g., comprise a non-round, drop-like cross-section axial direction. Such a drop-like cross-section may result in the sprags 105-1 - 105-6 being rotated such that they are thinner than the rollers 107, when rotating in the first direction of rotation 121. When rotating in the second direction of rotation 122, the sprags 105-1 - 105-6 may rotate such that they are thicker than the rollers 107, and block rotation of the outer cylindrical body 198 with regard to the inner cylindrical body 199.

The specific shape of the sprags 105-1 - 105-6 may depend on the respective application.

The first number i.e., the number of sprags 105-1 - 105-6, and the second number i.e., the number of rollers 107, may vary depending on the respective application. The sum of the first number and the second number is less or equal to the number of recesses 103-1 - 103-7.

In embodiments, the number of sprags 105-1 - 105-6 is larger than the number of rollers 107. Further, in embodiments, in the cylindrical roller cage 101 the sprags 105-1 - 105-6 and rollers 107 are evenly distributed in the recesses 103-1 - 103-7. In an embodiment, in the freewheel arrangement 100 the number of sprags 105-1 - 105-6 is three times the number of rollers 107, and a sequence of three sprags 105-1 - 105-6 followed by a roller 107 is repeatedly provided in the cylindrical roller cage 101.

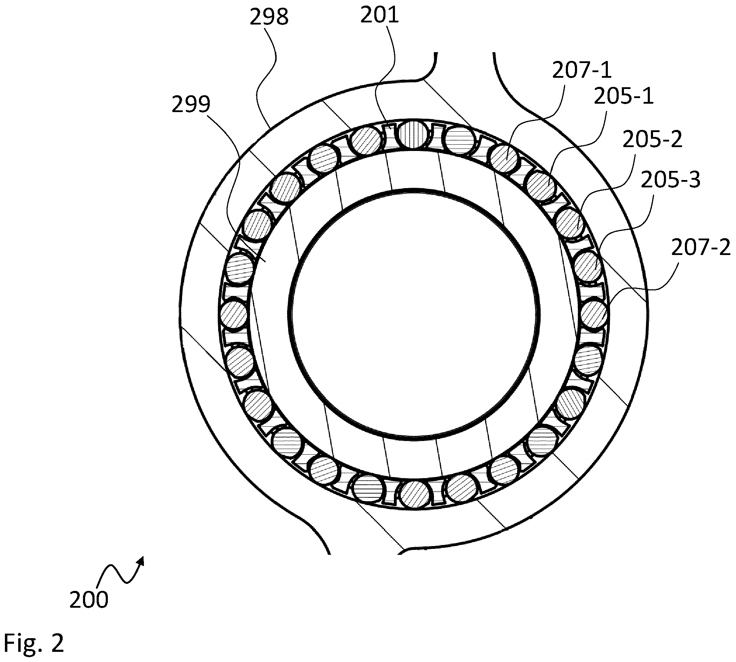

Figure 2 shows a schematic diagram of a freewheel arrangement 200 in a cross-sectional view from the left in the direction 104 of figure 1. The freewheel arrangement 200 is based on the freewheel arrangement 100. Therefore, the freewheel arrangement 200 comprises a cylindrical roller cage 201 arranged between an inner cylindrical body 299, and an outer cylindrical body 298. The cylindrical roller cage 201 comprises a hollow cylindrical body with a plurality of recesses in the hollow cylindrical body. A number of sprags 205-1 - 205-3, and a second number of rollers 207-1, 207-2 is arranged in the recesses of the hollow cylindrical body. The explanations provided herein for any one of the embodiments of the freewheel arrangement apply to the freewheel arrangement 200 mutatis mutandis.

In figure 2 it can be seen how the sprags 205-1 - 205-3, and rollers 207-1, 207-2 are sequentially arranged in the recesses of the cylindrical roller cage. In the specific example of the freewheel arrangement 200, repeatedly three sprags 205-1 - 205-3 are provided with one roller 207-1, 207-2.

It can be seen in figure 2 that the sprags 205-1 - 205-3 comprise a non-round, drop-like shape with a small tip on one side. This tip is the element that leads to the sprags 205-1 - 205-3 being thicker than the distance between the inner cylindrical body 299, and the outer cylindrical body 298, when the sprags 205-1 - 205-3 rotate in the respective recesses. In this situation, the sprags 205-1 - 205-3 will clamp the outer cylindrical body 298 against the inner cylindrical body 299 such that a rotational movement of the outer cylindrical body 298 with respect to the inner cylindrical body 299 is not possible.

In contrast, when the tips of the sprags 205-1 - 205-3 are tangentially oriented e.g., not directed towards the outer cylindrical body 298, the rollers 207-1, 207-2 rotatably support the outer cylindrical body 298 on the inner cylindrical body 299.

From figures 1 and 2 it is obvious that with the freewheel arrangement 100, 200 a very compact freewheeling arrangement may be provided.

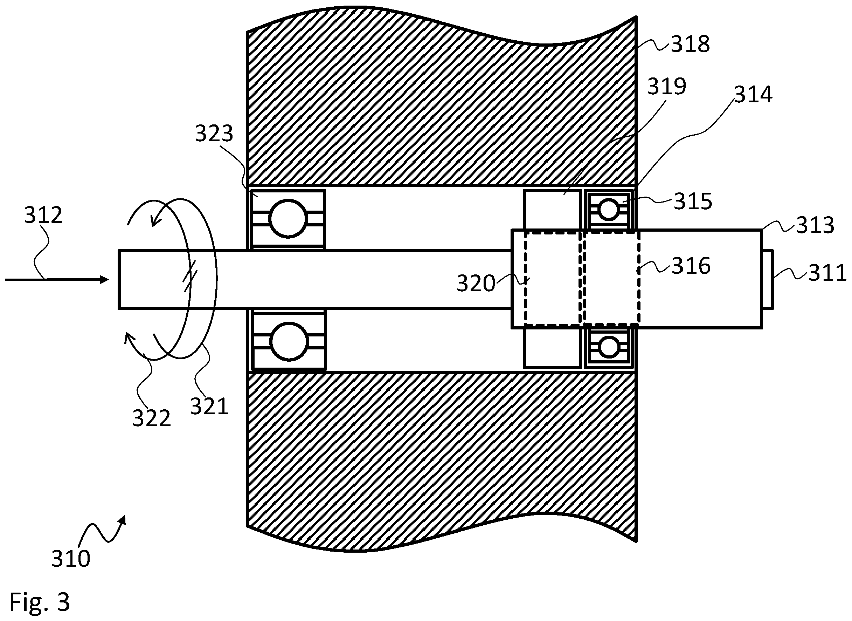

Figure 3 shows a schematic diagram of a hub arrangement 310. The hub arrangement 310 comprises a static hollow shaft arrangement 311 that is radially positioned in the center of the hub arrangement 310. The hub arrangement 310 further comprises a first drive arrangement 313 rotatably arranged on the static hollow shaft arrangement 311, a first bearing arrangement 314 comprising at least one bearing 315, wherein the first bearing arrangement 314 is arranged on the first drive arrangement 313 in a bearing section 316 of the first drive arrangement 313, and a second drive arrangement 318 arranged at least in part on the first bearing arrangement 314, wherein the at least one bearing 315 of the first bearing arrangement 314 rotatably supports the second drive arrangement 318 on the first drive arrangement 313. The hub arrangement 310 further comprises a freewheel arrangement 319 arranged between the first drive arrangement 313 and the second drive arrangement 318 in a freewheel section 320 of the first drive arrangement 313. The freewheel arrangement 319 may be a freewheel arrangement according to any one of the embodiments disclosed herein. The freewheel arrangement 319 allows rotation of the second drive arrangement 318 on the first drive arrangement 313 in a first direction of rotation 321, and blocks rotation of the second drive arrangement 318 on the first drive arrangement 313 in a second direction of rotation 322 that is opposite to the first direction of rotation 321. The explanations provided herein regarding any one of the embodiments of the hub arrangement apply mutatis mutandis to the hub arrangement 310, and single embodiments of the hub arrangement may be freely combined.

The specific freewheel arrangement 319, as disclosed herein in various possible embodiments, allows providing the freewheel arrangement 319 without the need to provide additional bearings or rollers on the sides of the freewheel arrangement 319 to further support the freewheel arrangement 319. In order to provide a compact hub arrangement 310, the freewheel section 320, and therefore the freewheel arrangement 319, is therefore arranged next to the bearing section 316, and therefore the first bearing arrangement 314, especially without any further elements, especially radial bearings or radial bushings, between the two sections.

The hub arrangement 310 further comprises a secondary drive bearing 323. The secondary drive bearing 323 serves to directly support the second drive arrangement 318 against the static hollow shaft arrangement 311 on the end of the static hollow shaft arrangement 311 that is opposite to the end of the static hollow shaft arrangement 311 that carries the first drive arrangement 313.

When using the hub arrangement 310 e.g., as the rear hub of a bicycle, the static hollow shaft arrangement 311 accommodates an axle for fixing the hub arrangement 310 to a rear fork of the bicycle. The first drive arrangement 313 usually carries the cassette or a belt pulley for transferring force to the hub arrangement 310 via a chain or a belt. This means that the static hollow shaft arrangement 311 does not rotate during operation of the hub arrangement 310, and that the first drive arrangement 313 rotates on the static hollow shaft arrangement 311 if driven by a chain or belt.

However, sometimes the driver of a bicycle will stop pedaling. In such situations, the wheel of the bicycle needs to continue turning, while the first drive arrangement 313 stops rotating.

Therefore, the second drive arrangement 318 is provided. The second drive arrangement 318 is rotatably supported by the first bearing arrangement 314 with the bearing 315 on the first drive arrangement 313. The second drive arrangement 318 may, consequently, rotate independently of the first drive arrangement 313. The second drive arrangement 318 is further supported on the static hollow shaft arrangement 311 by the secondary drive bearing 323.

In order to transfer force from the first drive arrangement 313 to the second drive arrangement 318, means for locking the second drive arrangement 318 with respect to the first drive arrangement 313 are required. These means are provided by the freewheel arrangement 319, as already explained above.

As can be seen, with the hub arrangement 310 a very compact freewheeling hub may be provided. Further, the first drive arrangement 313 provides an inward-facing end face that is freely accessible. It is especially possible to access the inward facing end face of the first drive arrangement 313 with other elements that may be provided in the hub arrangement 310 i.e., between the two ends of the static hollow shaft arrangement 311. Such elements may e.g., comprise sensors that measure the rotation of the first drive arrangement 313. Such measurements may be required especially in bicycle hubs with an integrated electric motor.

Such measurements in conventional hub arrangements 310 are not easily possible, since the first drive arrangement 313 of such hub arrangements 310 does not provide an accessible inward-facing end face. Instead, in such common hubs, complex wireless measurement systems are usually employed.

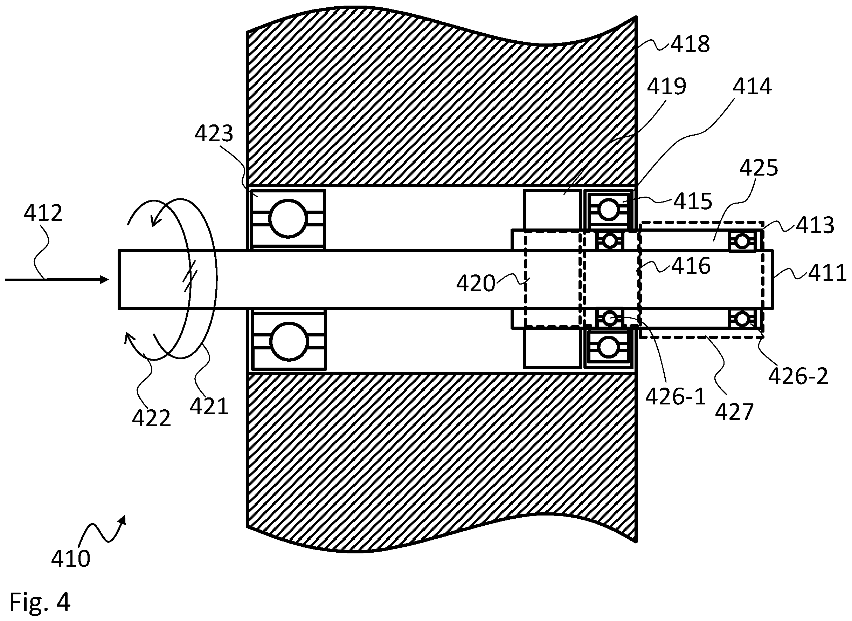

Figure 4 shows a schematic diagram of a hub arrangement 410. The hub arrangement 410 is based on the hub arrangement 310. Therefore, the hub arrangement 410 comprises a static hollow shaft arrangement 411 that is positioned in the center of the hub arrangement 410. The hub arrangement 410 further comprises a first drive arrangement 413 rotatably arranged on the static hollow shaft arrangement 411, a first bearing arrangement 414 comprising at least one bearing 415, wherein the first bearing arrangement 414 is arranged on the first drive arrangement 413 in a bearing section 416 of the first drive arrangement 413, and a second drive arrangement 418 arranged at least in part on the first bearing arrangement 414, wherein the at least one bearing 415 of the first bearing arrangement 414 rotatably supports the second drive arrangement 418 on the first drive arrangement 413. The hub arrangement 410 further comprises a freewheel arrangement 419 arranged between the first drive arrangement 413 and the second drive arrangement 418 in a freewheel section 420 of the first drive arrangement 413. The freewheel arrangement 419 may be a freewheel arrangement according to any one of the embodiments disclosed herein. The freewheel arrangement 419 allows rotation of the second drive arrangement 418 on the first drive arrangement 413 in a first direction of rotation 421, and blocks rotation of the second drive arrangement 418 on the first drive arrangement 413 in a second direction of rotation 422 that is opposite to the first direction of rotation 421. The hub arrangement 410 further comprises a secondary drive bearing 423. The explanations provided herein regarding any one of the embodiments of the hub arrangement apply mutatis mutandis to the hub arrangement 410, and single embodiments of the hub arrangement may be freely combined.

The hub arrangement 410 further comprises a second bearing arrangement 425 that is arranged between the static hollow shaft arrangement 411 and the first drive arrangement 413. The second bearing arrangement 425 exemplarily comprises two bearings 426-1, 426-2, while in other embodiments the second bearing arrangement 425 may comprise only one bearing 426-1 or more than two bearings.

The core concept is that one bearing 426-1 of the second bearing arrangement 425 is in axial direction positioned such that it overlaps the bearing 415 of the first bearing arrangement 414 in radial direction at least in part. In the hub arrangement 410, the bearing 415, and the bearing 426-1 are exemplarily arranged symmetrically to each other in radial direction or fully overlapping. The second bearing 426-2 is arranged on the outside of the first drive arrangement 413 to support the first drive arrangement 413 on the static hollow shaft arrangement 411.

While in the hub arrangement 410, the bearing 415 is larger than the bearing 426-1, in other embodiments the two bearings 415, 426-1 may have the same size, or the bearing 426-1 may be larger than bearing 415.

The arrangement of the bearings 415, 426-1 in the hub arrangement 410 is made possible by the very compact freewheel arrangement 419, and allows directly transferring radial forces from the static hollow shaft arrangement 411 to the outside of a wheel that carries the hub arrangement 410.

Force or rotational movement is transferred to the hub arrangement 410 via the coupling section 427. The second bearing arrangement 425 may, as explained above, accommodate a cassette or a belt pulley.

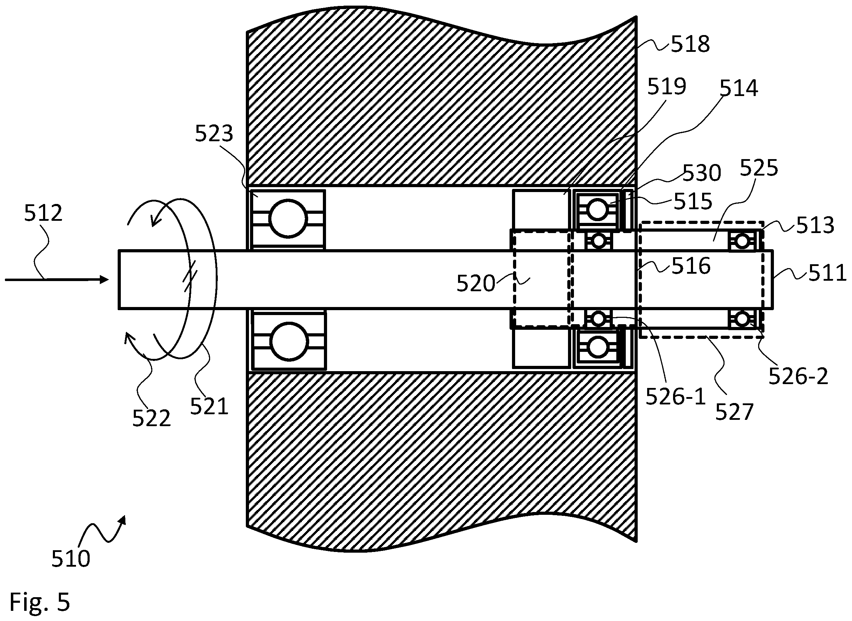

Figure 5 shows a schematic diagram of a hub arrangement 510. The hub arrangement 510 is based on the hub arrangement 410. Therefore, the hub arrangement 510 comprises a static hollow shaft arrangement 511 that is positioned in the center of the hub arrangement 510. The hub arrangement 510 further comprises a first drive arrangement 513 rotatably arranged on the static hollow shaft arrangement 511, a first bearing arrangement 514 comprising at least one bearing 515, wherein the first bearing arrangement 514 is arranged on the first drive arrangement 513 in a bearing section 516 of the first drive arrangement 513, and a second drive arrangement 518 arranged at least in part on the first bearing arrangement 514, wherein the at least one bearing 515 of the first bearing arrangement 514 rotatably supports the second drive arrangement 518 on the first drive arrangement 513. The hub arrangement 510 further comprises a freewheel arrangement 519 arranged between the first drive arrangement 513 and the second drive arrangement 518 in a freewheel section 520 of the first drive arrangement 513. The freewheel arrangement 519 may be a freewheel arrangement according to any one of the embodiments disclosed herein. The freewheel arrangement 519 allows rotation of the second drive arrangement 518 on the first drive arrangement 513 in a first direction of rotation 521, and blocks rotation of the second drive arrangement 518 on the first drive arrangement 513 in a second direction of rotation 522 that is opposite to the first direction of rotation 521. The hub arrangement 510 further comprises a secondary drive bearing 523. The hub arrangement 510 further comprises a second bearing arrangement 525 that is arranged between the static hollow shaft arrangement 511 and the first drive arrangement 513. The second bearing arrangement 525 exemplarily comprises two bearings 526-1, 526-2. The explanations provided herein regarding any one of the embodiments of the hub arrangement apply mutatis mutandis to the hub arrangement 510, and single embodiments of the hub arrangement may be freely combined.

In the hub arrangement 510, a seal 530 is further provided between the first drive arrangement 513, and the second drive arrangement 518. The seal 530 is provided on the side of the first bearing arrangement 514 that is opposite to the freewheel arrangement 519 i.e., on the outside of the first bearing arrangement 514.

Such an arrangement of a fully functional seal 530 between the first drive arrangement 513, and the second drive arrangement 518 is possible because of the compact freewheel arrangement 519 that leaves enough room for the seal 530, while at the same time leaving room for sensors and motor control electronics, as already explained above.

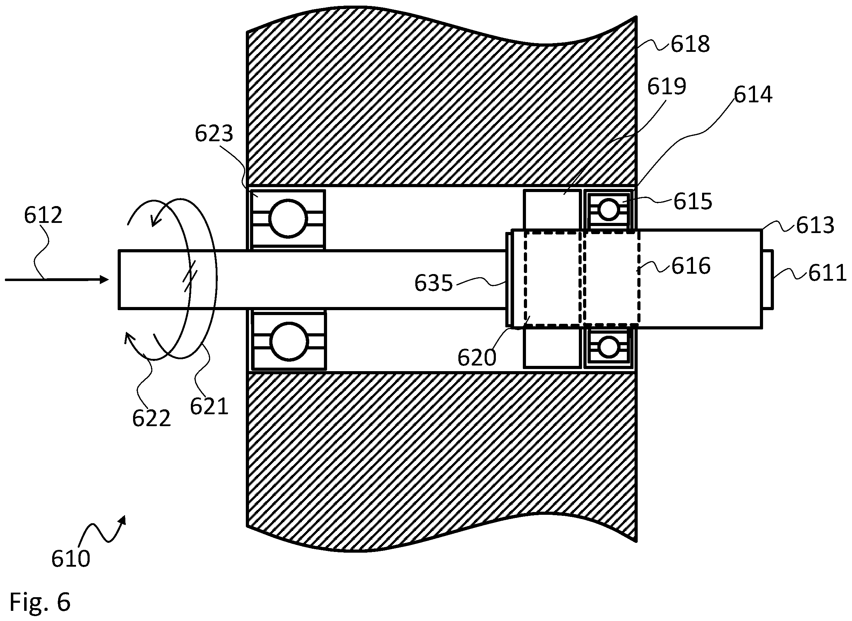

Figure 6 shows a schematic diagram of a hub arrangement 610. The hub arrangement 610 is based on the hub arrangement 310. Therefore, the hub arrangement 610 comprises a static hollow shaft arrangement 611 that is positioned in the center of the hub arrangement 610. The hub arrangement 610 further comprises a first drive arrangement 613 rotatably arranged on the static hollow shaft arrangement 611, a first bearing arrangement 614 comprising at least one bearing 615, wherein the first bearing arrangement 614 is arranged on the first drive arrangement 613 in a bearing section 616 of the first drive arrangement 613, and a second drive arrangement 618 arranged at least in part on the first bearing arrangement 614, wherein the at least one bearing 615 of the first bearing arrangement 614 rotatably supports the second drive arrangement 618 on the first drive arrangement 613. The hub arrangement 610 further comprises a freewheel arrangement 619 arranged between the first drive arrangement 613 and the second drive arrangement 618 in a freewheel section 620 of the first drive arrangement 613. The freewheel arrangement 619 may be a freewheel arrangement according to any one of the embodiments disclosed herein. The freewheel arrangement 619 allows rotation of the second drive arrangement 618 on the first drive arrangement 613 in a first direction of rotation 621, and blocks rotation of the second drive arrangement 618 on the first drive arrangement 613 in a second direction of rotation 622 that is opposite to the first direction of rotation 621. The hub arrangement 610 further comprises a secondary drive bearing 623. The explanations provided herein regarding any one of the embodiments of the hub arrangement apply mutatis mutandis to the hub arrangement 610, and single embodiments of the hub arrangement may be freely combined.

In the hub arrangement 610, the first drive arrangement 613 comprises an inward-facing or inner end face 635. This end face 635 may be ring shaped and may be provided by the circular surface in axial direction of the first drive arrangement 613 that faces to the inside of the hub arrangement 610.

This end face 635 may serve to accommodate or may comprise a signaling element that may be used to determined the speed of rotation of the first drive arrangement 613 with respect to the static hollow shaft arrangement 611. The signaling element may e.g., comprise a magnetic ring with a plurality of magnetic poles that may be measured with a respective hall sensor. Such a hall sensor may be provided in an electronic drive system that may be fixed onto the static hollow shaft arrangement 611 i.e., that does not turn during operation of the respective electric motor.

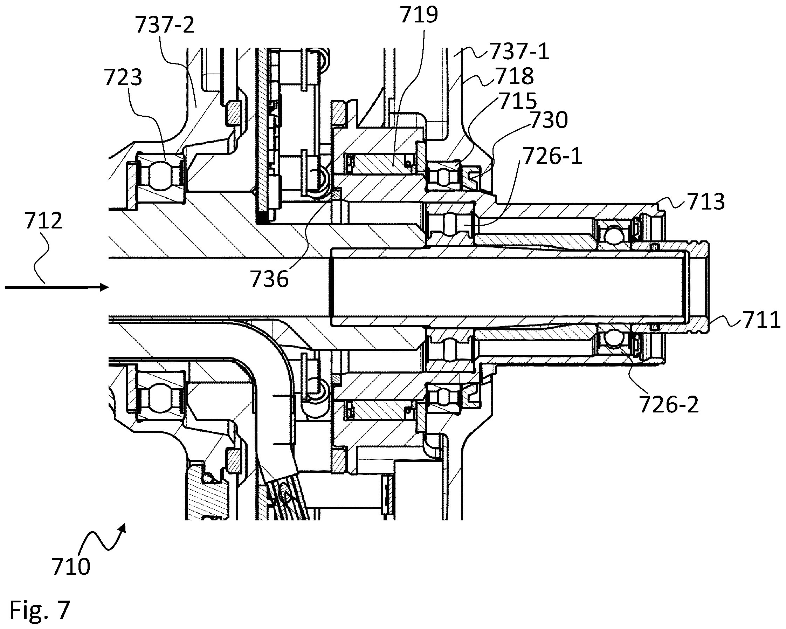

Figure 7 shows a schematic diagram of a hub arrangement 710 in a cross-sectional view. The hub arrangement 710 is a more specific embodiment of the hub arrangement 310. Therefore, the hub arrangement 710 comprises a static hollow shaft arrangement 711 that is positioned in the center of the hub arrangement 710. The hub arrangement 710 further comprises a first drive arrangement 713 rotatably arranged on the static hollow shaft arrangement 711, a first bearing arrangement comprising at least one bearing 715, and a second drive arrangement 718 arranged at least in part on the first bearing arrangement. The at least one bearing 715 of the first bearing arrangement rotatably supports the second drive arrangement 718 on the first drive arrangement 713. The hub arrangement 710 further comprises a freewheel arrangement 719 arranged between the first drive arrangement 713 and the second drive arrangement 718 in a freewheel section of the first drive arrangement 713. The freewheel arrangement 719 may be a freewheel arrangement according to any one of the embodiments disclosed herein. The freewheel arrangement 719 allows rotation of the second drive arrangement 718 on the first drive arrangement 713 in a first direction of rotation, and blocks rotation of the second drive arrangement 718 on the first drive arrangement 713 in a second direction of rotation that is opposite to the first direction of rotation. The hub arrangement 710 further comprises a secondary drive bearing 723. In the hub arrangement 710, a seal 730 is further provided between the first drive arrangement 713, and the second drive arrangement 718. The seal 730 is provided on the side of the first bearing arrangement 714 that is opposite to the freewheel arrangement 719 i.e., on the outside of the first bearing arrangement 714. The explanations provided herein regarding any one of the embodiments of the hub arrangement apply mutatis mutandis to the hub arrangement 710.

In the hub arrangement 710, the first drive arrangement 713 carries a signaling element 736 on the inward-facing end face, as already explained above. The signaling element 736 may comprise a multi-pole magnetic ring or disc.

In the hub arrangement 710, the second drive arrangement 718 extends to cover the static hollow shaft arrangement 711 and comprises a wall 737-1 on the right end, and a wall 737-2 on the left end of the static hollow shaft arrangement 711. The second drive arrangement 718, consequently, forms a kind of hollow space between the two walls. In the hub arrangement 710 further elements (not explicitly referenced) are shown in this hollow space. These elements may be electronic or electrical elements, like a sensor for acquiring a signal from the signaling element 736, and further elements for driving an electric motor, and the electric motor.

In the hub arrangement 710, a narrow disc is provided between the bearing 715 and the freewheel arrangement 719. This disc 738 is provided as a sliding element that allows the element of the second drive arrangement 718 that is provided above the freewheel arrangement 719 with respect to the side wall of the second drive arrangement 718. Such a movement is necessary if a torque sensor is implemented with the second drive arrangement 718, especially in combination with the first drive arrangement 713. Such a disk is not to be seen as a further element between the freewheel arrangement 719, and the bearing 715, but as element of the freewheel arrangement 719. The freewheel arrangement 719 may, consequently, be used without any additional radial bearings or bushings, also in the hub arrangement 710.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The abstract of the disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

### LIST OF REFERENCE SIGNS

- 100,200: freewheel arrangement
- 101, 201: cylindrical roller cage
- 102: hollow cylindrical body
- 103-1 - 103-7: recess
- 104: longitudinal direction
- 105-1 - 105-6, 205-1 - 205-3: sprag
- 107, 207-1, 207-2: roller
- 199, 299: inner cylindrical body
- 198, 298: outer cylindrical body
- 310, 410, 510, 610, 710: hub arrangement
- 311, 411, 511, 611, 711: static hollow shaft arrangement
- 312, 412, 512, 612, 712: longitudinal direction
- 313, 413, 513, 613, 713: first drive arrangement
- 314, 414, 514, 614: first bearing arrangement
- 315, 415, 515, 615, 715: bearing
- 316, 416, 516, 616: bearing section
- 318, 418, 518, 618, 718: second drive arrangement
- 319, 419, 519, 619, 719: freewheel arrangement
- 320, 420, 520, 620: freewheel section
- 121, 321, 421, 521, 621: first direction of rotation
- 122, 322, 422, 522, 622: second direction of rotation
- 323, 423, 523, 623, 723: secondary drive bearing
- 425, 525: second bearing arrangement
- 426-1, 426-2, 526-1, 526-2, 726-1, 726-2: bearing
- 427, 527: coupling section
- 530, 730: seal
- 635: end face
- 736: signaling element
- 737-1,737-2: wall
- 738: disc

## Claims

1. Hub arrangement (310, 410, 510, 610, 710) comprising:
a static hollow shaft arrangement (311, 411, 511, 611, 711);
a first drive arrangement (313, 413, 513, 613, 713) rotatably arranged on the static hollow shaft arrangement (311, 411, 511, 611, 711);
a first bearing arrangement (314, 414, 514, 614) comprising at least one bearing (315, 415, 515, 615, 715), wherein the first bearing arrangement (314, 414, 514, 614) is arranged on the first drive arrangement (313, 413, 513, 613, 713) in a bearing section (316, 416, 516, 616) of the first drive;
a second drive arrangement (318, 418, 518, 618, 718) arranged at least in part on the first bearing arrangement (314, 414, 514, 614), wherein the at least one bearing (315, 415, 515, 615, 715) of the first bearing arrangement (314, 414, 514, 614) rotatably supports the second drive arrangement (318, 418, 518, 618, 718) on the first drive arrangement (313, 413, 513, 613, 713); and
a freewheel arrangement (100, 200, 319, 419, 519, 619, 719), wherein the freewheel arrangement (100, 200, 319, 419, 519, 619, 719) is arranged between the first drive arrangement (313, 413, 513, 613, 713) and the second drive arrangement (318, 418, 518, 618, 718) in a freewheel section (320, 420, 520, 620) of the first drive arrangement (313, 413, 513, 613, 713);
wherein the freewheel arrangement (100, 200, 319, 419, 519, 619, 719) is configured to allow rotation of the second drive arrangement (318, 418, 518, 618, 718) on the first drive arrangement (313, 413, 513, 613, 713) in a first direction of rotation (121, 321, 421, 521, 621), and to block rotation of the second drive arrangement (318, 418, 518, 618, 718) on the first drive arrangement (313, 413, 513, 613, 713) in a second direction of rotation (122, 322, 422, 522, 622) that is opposite to the first direction of rotation (121, 321, 421, 521, 621);
wherein on the first drive arrangement (313, 413, 513, 613, 713) the freewheel section (320, 420, 520, 620) is arranged next to the bearing section (316, 416, 516, 616).

2. Hub arrangement (310, 410, 510, 610, 710) according to claim 1, wherein the freewheel section (320, 420, 520, 620) is arranged directly adjacent to the bearing section (316, 416, 516, 616).

3. Hub arrangement (310, 410, 510, 610, 710) according to any one of the preceding claims, further comprising a second bearing arrangement (425, 525) arranged between the static hollow shaft arrangement (311, 411, 511, 611, 711) and the first drive arrangement (313, 413, 513, 613, 713);
wherein the second bearing arrangement (425, 525) comprises at least one bearing (426-1, 426-2, 526-1, 526-2, 726-1, 726-2); and
wherein at least one bearing (315, 415, 515, 615, 715) of the first bearing arrangement (314, 414, 514, 614) is arranged at least in part over at least one bearing (426-1, 526-1, 726-1)of the second bearing arrangement (425, 525) in axial direction.

4. Hub arrangement (310, 410, 510, 610, 710) according to any one of the preceding claims, wherein the first drive arrangement (313, 413, 513, 613, 713) further comprises a coupling section (427, 527) arranged next to the bearing section (316, 416, 516, 616) on a side of the bearing section (316, 416, 516, 616) that is opposite to the freewheel section (320, 420, 520, 620);
wherein the coupling section (427, 527) is configured to couple the first drive arrangement (313, 413, 513, 613, 713) to an external drive train.

5. Hub arrangement (310, 410, 510, 610, 710) according to claim 4, wherein the coupling section (427, 527) is arranged directly adjacent to the bearing section (316, 416, 516, 616).

6. Hub arrangement (310, 410, 510, 610, 710) according to any one of the preceding claims, further comprising a seal (530, 730) arranged on the first drive arrangement (313, 413, 513, 613, 713) next to the at least one bearing (315, 415, 515, 615, 715) of the first bearing arrangement (314, 414, 514, 614);
wherein the seal (530, 730) is axially arranged on a side of the at least one bearing (315, 415, 515, 615, 715) that is opposite to the freewheel arrangement (100, 200, 319, 419, 519, 619, 719).

7. Hub arrangement (310, 410, 510, 610, 710) according to claim 6, wherein the seal (530, 730) is arranged directly adjacent to the at least one bearing (315, 415, 515, 615, 715) of the first bearing arrangement (314, 414, 514, 614).

8. Hub arrangement (310, 410, 510, 610, 710) according to any one of the preceding claims, wherein the freewheel arrangement (100, 200, 319, 419, 519, 619, 719) comprises:
a cylindrical roller cage (101, 201) arranged between the first drive arrangement (313, 413, 513, 613, 713) and the second drive arrangement (318, 418, 518, 618, 718), the cylindrical roller cage (101, 201) comprising a hollow cylindrical body (102) with a plurality of recesses (103-1 - 103-7) in the hollow cylindrical body (102);
a first number of sprags (105-1 - 105-6, 205-1 - 205-3), wherein each sprag (105-1 - 105-6, 205-1 - 205-3) is arranged in one of the recesses (103-1 - 103-7) of the hollow cylindrical body (102); and
a second number of rollers (107, 207-1, 207-2), wherein each roller (107, 207-1, 207-2) is arranged in one of the recesses (103-1 - 103-7) of the hollow cylindrical body (102);
wherein the sprags (105-1 - 105-6, 205-1 - 205-3) are configured to allow rotation of the second drive arrangement (318, 418, 518, 618, 718) with regard to the first drive arrangement (313, 413, 513, 613, 713) in the first direction of rotation (121, 321, 421, 521, 621), and to block rotation of the second drive arrangement (318, 418, 518, 618, 718) with regard to the first drive arrangement (313, 413, 513, 613, 713) in the second direction of rotation (122, 322, 422, 522, 622).

9. Hub arrangement (310, 410, 510, 610, 710) according to claim 8, wherein in the freewheel arrangement (100, 200, 319, 419, 519, 619, 719) the number of sprags (105-1 - 105-6, 205-1 - 205-3) is larger than the number of rollers (107, 207-1, 207-2), and wherein in the cylindrical roller cage (101, 201) the sprags (105-1 - 105-6, 205-1 - 205-3) and rollers (107, 207-1, 207-2) are evenly distributed in the recesses (103-1 - 103-7).

10. Hub arrangement (310, 410, 510, 610, 710) according to claim 9, wherein in the freewheel arrangement (100, 200, 319, 419, 519, 619, 719) the number of sprags (105-1 - 105-6, 205-1 - 205-3) is three times the number of rollers (107, 207-1, 207-2), and wherein a sequence of three sprags (105-1 - 105-6, 205-1 - 205-3) followed by a roller (107, 207-1, 207-2) is repeatedly provided in the cylindrical roller cage (101, 201).

11. Hub arrangement (310, 410, 510, 610, 710) according to any one of claims 8 to 10, wherein the sum of the first number and the second number is equal to the number of recesses (103-1 - 103-7).

12. Hub arrangement (310, 410, 510, 610, 710) according to any one of the preceding claims, wherein the first drive arrangement (313, 413, 513, 613, 713) comprises an end face (635) on and end of the freewheel section (320, 420, 520, 620), wherein the end face (635) is configured to accommodate a signaling element (736) for a rotary sensor.

13. Hub arrangement (310, 410, 510, 610, 710) according to claim 12, wherein the first drive arrangement (313, 413, 513, 613, 713) comprises the signaling element (736) arranged on the end face (635).

14. Hub arrangement (310, 410, 510, 610, 710) according to claim 13, further comprising a sensor element arranged on the static hollow shaft arrangement (311, 411, 511, 611, 711), wherein the sensor element is configured to measure a physical parameter from the signaling element (736) and output a respective measurement signal.

## Amended claims

### Amended claims in accordance with Rule 137(2) EPC.

1. Hub arrangement (310, 410, 510, 610, 710) comprising:
a static hollow shaft arrangement (311, 411, 511, 611, 711);
a first drive arrangement (313, 413, 513, 613, 713) rotatably arranged on the static hollow shaft arrangement (311, 411, 511, 611, 711);
a first bearing arrangement (314, 414, 514, 614) comprising at least one bearing (315, 415, 515, 615, 715), wherein the first bearing arrangement (314, 414, 514, 614) is arranged on the first drive arrangement (313, 413, 513, 613, 713) in a bearing section (316, 416, 516, 616) of the first drive;
a second drive arrangement (318, 418, 518, 618, 718) arranged at least in part on the first bearing arrangement (314, 414, 514, 614), wherein the at least one bearing (315, 415, 515, 615, 715) of the first bearing arrangement (314, 414, 514, 614) rotatably supports the second drive arrangement (318, 418, 518, 618, 718) on the first drive arrangement (313, 413, 513, 613, 713); and
a freewheel arrangement (100, 200, 319, 419, 519, 619, 719), wherein the freewheel arrangement (100, 200, 319, 419, 519, 619, 719) is arranged between the first drive arrangement (313, 413, 513, 613, 713) and the second drive arrangement (318, 418, 518, 618, 718) in a freewheel section (320, 420, 520, 620) of the first drive arrangement (313, 413, 513, 613, 713);
wherein the freewheel arrangement (100, 200, 319, 419, 519, 619, 719) is configured to allow rotation of the second drive arrangement (318, 418, 518, 618, 718) on the first drive arrangement (313, 413, 513, 613, 713) in a first direction of rotation (121, 321, 421, 521, 621), and to block rotation of the second drive arrangement (318, 418, 518, 618, 718) on the first drive arrangement (313, 413, 513, 613, 713) in a second direction of rotation (122, 322, 422, 522, 622) that is opposite to the first direction of rotation (121, 321, 421, 521, 621);
wherein on the first drive arrangement (313, 413, 513, 613, 713) the freewheel section (320, 420, 520, 620) is arranged next to the bearing section (316, 416, 516, 616),
**characterized in that**
the hub arrangement further comprising a second bearing arrangement (425, 525) arranged between the static hollow shaft arrangement (311, 411, 511, 611, 711) and the first drive arrangement (313, 413, 513, 613, 713);
wherein the second bearing arrangement (425, 525) comprises at least one bearing (426-1, 426-2, 526-1, 526-2, 726-1, 726-2); and
wherein at least one bearing (315, 415, 515, 615, 715) of the first bearing arrangement (314, 414, 514, 614) is arranged at least in part over at least one bearing (426-1, 526-1, 726-1)of the second bearing arrangement (425, 525) in axial direction.

2. Hub arrangement (310, 410, 510, 610, 710) according to claim 1, wherein the freewheel section (320, 420, 520, 620) is arranged directly adjacent to the bearing section (316, 416, 516, 616).

3. Hub arrangement (310, 410, 510, 610, 710) according to any one of the preceding claims, wherein the first drive arrangement (313, 413, 513, 613, 713) further comprises a coupling section (427, 527) arranged next to the bearing section (316, 416, 516, 616) on a side of the bearing section (316, 416, 516, 616) that is opposite to the freewheel section (320, 420, 520, 620);
wherein the coupling section (427, 527) is configured to couple the first drive arrangement (313, 413, 513, 613, 713) to an external drive train.

4. Hub arrangement (310, 410, 510, 610, 710) according to claim 3, wherein the coupling section (427, 527) is arranged directly adjacent to the bearing section (316, 416, 516, 616).

5. Hub arrangement (310, 410, 510, 610, 710) according to any one of the preceding claims, further comprising a seal (530, 730) arranged on the first drive arrangement (313, 413, 513, 613, 713) next to the at least one bearing (315, 415, 515, 615, 715) of the first bearing arrangement (314, 414, 514, 614);
wherein the seal (530, 730) is axially arranged on a side of the at least one bearing (315, 415, 515, 615, 715) that is opposite to the freewheel arrangement (100, 200, 319, 419, 519, 619, 719).

6. Hub arrangement (310, 410, 510, 610, 710) according to claim 5, wherein the seal (530, 730) is arranged directly adjacent to the at least one bearing (315, 415, 515, 615, 715) of the first bearing arrangement (314, 414, 514, 614).

7. Hub arrangement (310, 410, 510, 610, 710) according to any one of the preceding claims, wherein the freewheel arrangement (100, 200, 319, 419, 519, 619, 719) comprises:
a cylindrical roller cage (101, 201) arranged between the first drive arrangement (313, 413, 513, 613, 713) and the second drive arrangement (318, 418, 518, 618, 718), the cylindrical roller cage (101, 201) comprising a hollow cylindrical body (102) with a plurality of recesses (103-1 - 103-7) in the hollow cylindrical body (102);
a first number of sprags (105-1 - 105-6, 205-1 - 205-3), wherein each sprag (105-1 - 105-6, 205-1 - 205-3) is arranged in one of the recesses (103-1 - 103-7) of the hollow cylindrical body (102); and
a second number of rollers (107, 207-1, 207-2), wherein each roller (107, 207-1, 207-2) is arranged in one of the recesses (103-1 - 103-7) of the hollow cylindrical body (102);
wherein the sprags (105-1 - 105-6, 205-1 - 205-3) are configured to allow rotation of the second drive arrangement (318, 418, 518, 618, 718) with regard to the first drive arrangement (313, 413, 513, 613, 713) in the first direction of rotation (121, 321, 421, 521, 621), and to block rotation of the second drive arrangement (318, 418, 518, 618, 718) with regard to the first drive arrangement (313, 413, 513, 613, 713) in the second direction of rotation (122, 322, 422, 522, 622).

8. Hub arrangement (310, 410, 510, 610, 710) according to claim 7, wherein in the freewheel arrangement (100, 200, 319, 419, 519, 619, 719) the number of sprags (105-1 - 105-6, 205-1 - 205-3) is larger than the number of rollers (107, 207-1, 207-2), and wherein in the cylindrical roller cage (101, 201) the sprags (105-1 - 105-6, 205-1 - 205-3) and rollers (107, 207-1, 207-2) are evenly distributed in the recesses (103-1 - 103-7).

9. Hub arrangement (310, 410, 510, 610, 710) according to claim8, wherein in the freewheel arrangement (100, 200, 319, 419, 519, 619, 719) the number of sprags (105-1 - 105-6, 205-1 - 205-3) is three times the number of rollers (107, 207-1, 207-2), and wherein a sequence of three sprags (105-1 - 105-6, 205-1 - 205-3) followed by a roller (107, 207-1, 207-2) is repeatedly provided in the cylindrical roller cage (101, 201).

10. Hub arrangement (310, 410, 510, 610, 710) according to any one of claims 7 to 9, wherein the sum of the first number and the second number is equal to the number of recesses (103-1 - 103-7).

11. Hub arrangement (310, 410, 510, 610, 710) according to any one of the preceding claims, wherein the first drive arrangement (313, 413, 513, 613, 713) comprises an end face (635) on and end of the freewheel section (320, 420, 520, 620), wherein the end face (635) is configured to accommodate a signaling element (736) for a rotary sensor.

12. Hub arrangement (310, 410, 510, 610, 710) according to claim 11, wherein the first drive arrangement (313, 413, 513, 613, 713) comprises the signaling element (736) arranged on the end face (635).

13. Hub arrangement (310, 410, 510, 610, 710) according to claim 12, further comprising a sensor element arranged on the static hollow shaft arrangement (311, 411, 511, 611, 711), wherein the sensor element is configured to measure a physical parameter from the signaling element (736) and output a respective measurement signal.
